# EUROPEAN PATENT APPLICATION

(11) **EP 2 747 356 A1**
(43) Date of publication of application: **25.06.2014**
(21) Application number: 13195810.0
(22) Date of filing: 05.12.2013
(51) Int. Cl.: H04L 12/723

(54) **Reduced complexity multiprotocol label switching**

(30) Priority: 21.12.2012 US 201213724400
(71) Applicant: Ciena Corporation, Hanover, MD 21076 (US)
(72) Inventor: Duncan, Ian Hamish, Ottawa, Ontario K2K 3C8 (CA); Bragg, Nigel Lawrence, Cambridge, CB21 5NX (GB)
(74) Representative: Bridge, Kerry Ann

(57) **Abstract**

A reduced complexity Multiprotocol Label Switching (MPLS) method, 30, a MPLS network element, 40, and a MPLS network, 10, utilize an MPLS operating regime whereby disjoint sets of one or more MPLS labels are uniquely and specifically associated with just one switch, i.e. each switch node is assigned one or more non-overlapping labels from the RFC 3032 20 bit label space to bind to particular service end-points; which then enables these labels to embody the core properties of a destination address (DA) in the network sub-domain in which they are used. The central property is that these DA labels are constant for a given forwarding path across the entire sub-domain, remaining unchanged at any extends in the network. Once that is achieved, any and all hop-by-hop signaling protocols are unnecessary, since there is no need for label swapping, and the label-switching-node binding information can be flooded by interior routing protocols only.

## Description

### FIELD OF THE DISCLOSURE

The present disclosure relates generally to networking systems and methods. More particularly, the present disclosure relates to reduced complexity Multiprotocol Label Switching (MPLS) systems and methods.

### BACKGROUND OF THE DISCLOSURE

Multiprotocol Label Switching (MPLS) is a mechanism applied in networks that directs data from one network node or network element to the next based on locally significant short path labels rather than long, globally significant, network addresses, so avoiding complex lookups in a routing table. For example, MPLS is described, in part, in Request for Comments (RFC) 3032 "MPLS Label Stack Encoding," January 2001, the contents of which are incorporated by reference herein. The availability and use of RFC 3032 compatible MPLS-capable hardware for packet switching is ubiquitous, and the industry recognizes it as a cost-effective technique for packet forwarding. Even within software or network processor unit (NPU) forwarding systems, RFC 3032 packet processing provides similar simplicity and consequent high performance. However current operations of RFC 3032 packet forwarding requires very significant control protocol complexity, which stems fundamentally from the need to create and maintain link-local labels (to support label push, swap, and pop) for every end-to-end path across the network, using an array of signaling protocols such as Label Distribution Protocol (LDP), Resource Reservation Protocol - Traffic Engineering (RSVP-TE), and multicast-LDP coupled with and dependent upon routing protocols such as Intermediate System To Intermediate System (IS-IS) and Open Shortest Path First (OSPF), with or without Traffic Engineering (TE) extensions, and Border Gateway Protocol (BGP).

In addition to the inherent complexity of such protocols, in many cases the label path signaling can only execute once the underlying unicast topology has converged, thus delaying recovery from faults. Extra control complexity in the form of Fast Reroute (FRR) and/or Loop Free Alternate (LFA) paths is therefore frequently applied, in order to mask faults until reconvergence has taken place. As above, MPLS exists, is very widely deployed, and can be configured to deliver a wide range of functionalities and services, but because of its design it requires a significant number of complex protocols.

### BRIEF SUMMARY OF THE DISCLOSURE

In an exemplary embodiment, a reduced complexity Multiprotocol Label Switching (MPLS) method includes defining a reserved block of an MPLS label space; uniquely assigning a non-overlapping subset of one or more labels from the block to each network element in a network; operating the network with the reserved block utilizing reduced control plane complexity; and, at each Label Switched Router, forwarding a packet with one of the reserved block labels contained thereon without altering the label thereon. The reduced complexity MPLS method can further include distributing the non-overlapping subset of labels for each network element by flooding unaltered to all other network elements. The reduced complexity MPLS method can further include distributing the non-overlapping subset of labels for each network element with an Interior Gateway Protocol with no Traffic Engineering extensions. The reduced complexity MPLS method can further include eliminating Resource Reservation Protocol - Traffic Engineering and Label Distribution Protocol in the label distribution step. The reduced complexity MPLS method can further include utilizing one or more of Label Distribution Protocol, Border Gateway Protocol, and Openflow for cross-domain and inter-domain forwarding to mediate flows at sub-domain borders.

The reduced complexity MPLS method can further include exchanging the non-overlapping subset of labels for each network element via an internal Border Gateway Protocol Route Reflector peered with every MPLS network element in the network. The reduced complexity MPLS method can further include exchanging the non-overlapping subset of labels for each network element via an internal Border Gateway Protocol peering between every MPLS network element in the network. The reduced complexity MPLS method can further include performing standard MPLS label swapping operations on packets containing labels outside the reserved block of labels. The reduced complexity MPLS method can further include forwarding a packet with one of the reserved block of labels contained thereon by performing a look up to determine the egress port without requiring a label swapping operation. The reduced complexity MPLS method can further include forwarding a packet with one of the reserved block of labels contained thereon by performing a label swapping operation to a same label as the one of the subset contained thereon.

In another exemplary embodiment, a Multiprotocol Label Switching (MPLS) network element includes at least one port; forwarding circuitry communicatively coupled to the port; and control circuitry communicatively coupled to the forwarding circuitry and the port; wherein the forwarding circuitry and the control circuitry are configured to: receive a defined reserved block of labels from a MPLS label space, each label being available to be associated with a distinct logical destination in the network; for a packet entering the network on the at least one port, assigning the packet entering one of the defined reserved block of labels, the label assigned being determined by an ultimate logical destination of the packet in the network; and, for a packet on a Label Switched Path through the at least one port, forwarding the packet on the Label Switched Path with a same label contained thereon based on being in the defined reserved block of labels. The forwarding circuitry and the control circuitry can be further configured to distribute the defined reserved block of labels by flooding unaltered to all other network elements. The forwarding circuitry and the control circuitry can be further configured to distribute the defined reserved block of labels with an Interior Gateway Protocol with no Traffic Engineering extensions.

The forwarding circuitry and the control circuitry can be further configured to exchange the defined reserved block of labels via an internal Border Gateway Protocol peering between every MPLS network element in the network. The forwarding circuitry and the control circuitry can be further configured to utilize one of Label Distribution Protocol, Border Gateway Protocol, and Openflow for cross-domain and inter-domain forwarding to mediate flows at sub-domain borders. The forwarding circuitry and the control circuitry can be further configured to exchange the defined reserved block of labels via an internal Border Gateway Protocol Route Reflector peered with every participating MPLS network element in the network. The defined reserved block of labels can include a portion of labels in a 2²⁰ address space, and wherein the forwarding circuitry and the control circuitry can be further configured to perform standard MPLS label swapping operations on packets containing labels outside the defined reserved block of labels. The forwarding circuitry and the control circuitry can be further configured to forward a packet with one of the defined reserved block of labels contained thereon by performing a look up without requiring a label swapping operation. The forwarding circuitry and the control circuitry can be further configured to forward a packet with one of the defined reserved block of labels contained thereon by performing a label swapping operation to a same label as the one of the defined reserved block of labels contained thereon.

In yet another exemplary embodiment, a Multiprotocol Label Switching (MPLS) network includes a plurality of network elements connected therebetween; a defined reserved block of a MPLS label space; a uniquely assigned subset of labels from the defined reserved block to each of the plurality of network elements; and a reduced complexity control plane; wherein, for a packet entering the network at one of the plurality of network elements, the packet entering the network is assigned one of the uniquely assigned subset of labels learned by that network element, the label assigned being determined by an ultimate logical destination of the packet in the network; and wherein, for a packet on a Label Switched Path, the packet on the Label Switched Path includes the same label throughout its transit of the network.

### BRIEF DESCRIPTION OF THE DRAWINGS

The present disclosure is illustrated and described herein with reference to the various drawings, in which like reference numbers are used to denote like system components/method steps, as appropriate, and in which:
FIG. 1 is a network diagram of an exemplary MPLS network with three network elements contained therein;
FIG. 2 is a flowchart of a reduced complexity MPLS switching method 30 for use in the MPLS network of FIG. 1; and
FIG. 3 is a block diagram of an exemplary implementation of a network element which may be used with the reduced complexity MPLS systems and methods of FIGS. 1 and 2.

### DETAILED DESCRIPTION OF THE DISCLOSURE

In various exemplary embodiments, changes are presented to the present MPLS operating regime whereby disjoint sets of one or more MPLS labels are uniquely and specifically associated with just one switch, i.e. each switch node is assigned one or more non-overlapping labels from the RFC 3032 20 bit label space to bind to particular service end-points; which then enables these labels to embody the core properties of a destination address (DA) in the network sub-domain in which they are used. The central property is that these DA labels are constant for a given forwarding path across the entire sub-domain, remaining unchanged at any point in the network. This is possible because although historically a large label space has been needed to represent individual Internet Protocol (IP) prefixes in a flat addressing scheme, the increasing use of virtualization and the concomitant network hierarchy means that labels need only be assigned to nodes at the boundary of a hierarchical domain, and need only be unique within that domain. Once that is achieved, any and all hop-by-hop signaling protocols are unnecessary, since there is no need for label swapping, and the unchanged label-to-node binding information can be flooded by interior routing protocols only. Thus, a low complexity Interior Gateway Protocol (IGP) (i.e., no TE extensions) is the only remaining protocol absolutely required to operate the network sub-domain. Additionally, to provide operation of cross-domain and inter-domain forwarding requires functions such as additional protocols (e.g. LDP, BGP or OpenFlow) or other mechanisms to mediate flows at sub-domain borders.

Advantageously, the reduced complexity MPLS systems and methods allow turning off all MPLS hop-by-hop signaling protocols, resulting in operational complexity reduction without loss of MPLS functional capability. The large amount of stored state necessary to support liberal label retention for restoration is removed, and replaced by in-place computation. Additionally, much faster restoration of multicast trees is achieved, because hop-by-hop signaling over the converged unicast topology is eliminated, again replaced by in-place computation. The fault set to be probed by Operations, Administration, and Maintenance (OAM) is reduced, because there is no longer a level of indirection between a Forward Equivalency Class (FEC) and its link-local representation. It is expected the reduced complexity MPLS systems and methods will provide widespread adoption as these systems and methods leverage existing, widely deployed MPLS forwarding mechanisms. The novelty lies in the elimination of label swapping from MPLS, hitherto thought to be intrinsic to MPLS operation, and the assignment of labels each uniquely associated with a single node or network element throughout the network domain, and then the distribution of these labels by flooding using the IGP.

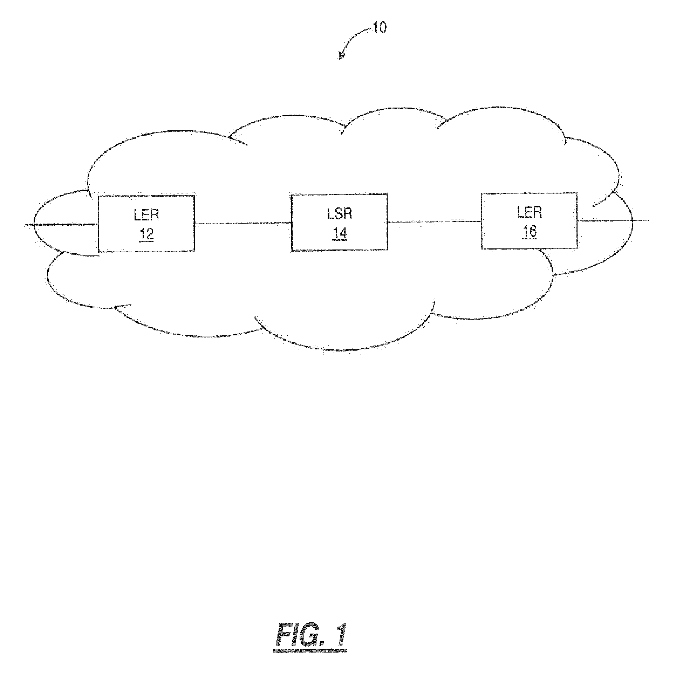

Referring to FIG. 1, in an exemplary embodiment, a network diagram illustrates an MPLS network 10 with three network elements 12, 14, 16 contained therein. The network elements 12, 16 are Label Edge Routers (LER) which can also be referred to as Provider Edge (PE) nodes. The network element 14 is a Label Switch Router (LSR) which can also be referred to as Provider (P) nodes. The MPLS network 10 is presented herein for illustration purposes and those of ordinary skill in the art will recognize other deployments can include additional network elements. Within the MPLS network 10, the LSR 14 is configured to forward traffic along Label Switched Paths (LSPs) between the LERs 12, 16. MPLS is used in the MPLS network 10 to reduce a number of lookups performed at the various network elements 12, 14, 16. For example, a packet can be received by the LER 12 which conventionally performs a lookup to determine which label should be pushed onto the packet to switch the packet onto an LSP to the next hop through the MPLS network 10 to reach its destination. When the packet arrives at the LSR 14, the LSR 14 will read the MPLS label and replace the MPLS label with a new MPLS label. MPLS thus allows a single route lookup to be performed at the edge of the MPLS network 10, and allows label switching to be used instead of lookups to forward the packet across the MPLS network 10. Forwarding in an MPLS network 10 is performed by swapping a label after stripping the Media Access Control (MAC) header at each hop.

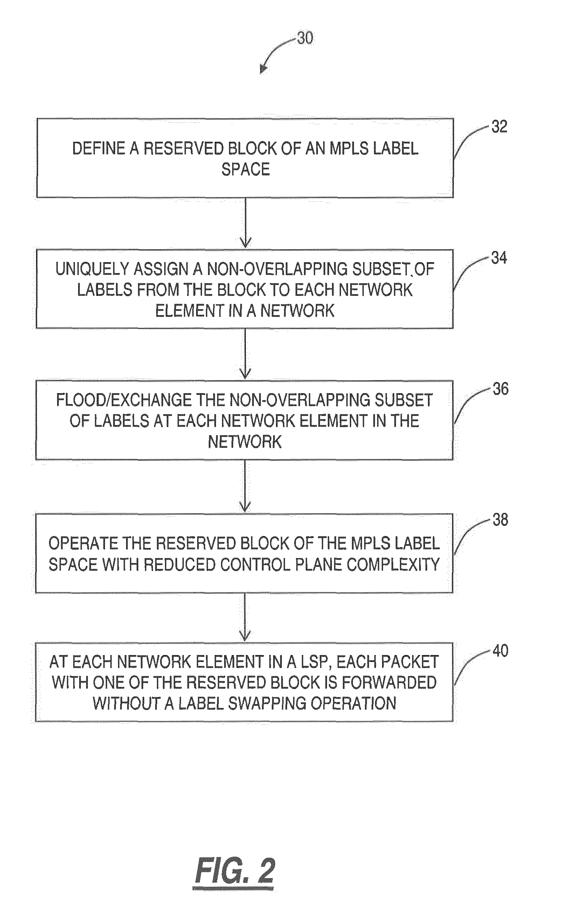

Referring to FIG. 2, in an exemplary embodiment, a flowchart illustrates a reduced complexity MPLS switching method 30 for use in the MPLS network 10. The reduced complexity MPLS switching method 30 seeks to modify the operating regime of the MPLS network 10 to reduce control plane complexity. First, it is noted that the MPLS label space, per RFC 3032, is 2²⁰ (i.e., O(10⁶)). From this MPLS label space, a reserved block of MPLS labels is defined (step 32). The MPLS label space is large enough that a significant sized block of labels can be blocked off in the reserved block, sufficient to allocate a block exclusively for the use of each switch in the network domain. In an exemplary embodiment, the reserved block can include a portion of the entire MPLS label space (2²⁰). In another exemplary embodiment, the reserved block can include the entire MPLS label space (2²⁰). A non-overlapping subset of labels is uniquely assigned from the reserved block to each network element 12, 14, 16 in the MPLS network 10 (step 34). Due to the large label space, it is possible to uniquely assign to every network element 12, 14, 16 in the MPLS network 10 a reasonable number of unique labels from the reserved block, while still having the vast fraction of labels available for traditional MPLS per-hop label swap, if desired. For example, a sub-domain including 500 network elements, each assigned 20 labels, uses approximately one percent of the total label space.

The reduced complexity MPLS switching method 30 converts the MPLS operating regime from one of local allocation, i.e. each network element takes a label from the overall MPLS label space to send to a downstream network element, to one of network-wide allocation, i.e. each network element has a non-overlapping subset of labels for use that are guaranteed to be unique based on steps 32, 34. In this manner, MPLS labels are treated similarly to Internet Protocol (IP) prefixes and MAC address subsets. Each network element knows its unique significant sized block of labels *a priori* thereby reducing complexity in the control plane. Once assigned, the non-overlapping subset of labels can be flooded/exchanged by each network element (step 36). For example, the flooding can be based solely on interior routing protocols.

The reduced complexity MPLS switching method 30 includes operating the reserved block of the MPLS label space with a reduced complexity control plane (step 38). Since the reserved block is uniquely assigned *a priori,* distribution of the labels from the network elements can be performed throughout the network in a straightforward manner, without signaling. For example, Labeled routes may be exchanged within the network 10 either by use of an internal Border Gateway Protocol (iBGP) Route Reflector peered with every MPLS network element in the network 10, or by flooding labels in the IGP (as Shortest Path Bridging-MAC (SPBM) does). As such, various complex protocols are unnecessary in the network 10, such as RSVP-TE, LDP, and the like. That is, a low complexity IGP (i.e., no TE extensions) is the only remaining protocol absolutely required to operate the network 10 sub-domain. Also, to provide operation of cross-domain and inter-domain forwarding requires functions such as additional protocols (e.g. LDP, BGP or OpenFlow) or other mechanisms to mediate flows at sub-domain borders.

Operationally, at each network element on a LSP, each packet with one of the reserved block of labels is forwarded without a label swapping operation (step 40). For example, an initial packet entering at the LER 12 can be assigned a label by the LER 12 from one of its block of labels, and sent to the LSR 14. This assigned label is based on the ultimate destination of the packet in the MPLS network 10. At the LSR 14, the packet does not require a label swapping operation, but a simple look up to determine only the egress port which is on the next hop to the destination. In an exemplary embodiment, the reduced complexity MPLS switching method 30 could actually perform a label swapping operation but swapping to a same label as already provided on the packet. The LSR 14 forwards the packet to the LER 16 where the label is popped and processed accordingly. This can be viewed as providing a new tunnel service within MPLS with a dramatically reduced complexity in the control plane.

One exemplary driver for the reduced complexity MPLS switching method 30 is the emerging SPBM specification. SPBM utilizes a network-wide allocation of addressing thereby having significantly reduced complexity. However, SPBM is not widely deployed, unlike MPLS. An exemplary objective is to leverage the widely deployed base of MPLS while providing reduced complexity therewith. For example, the MPLS label space can be managed similarly to Ethernet MAC headers in SPBM. Routes will be exchanged across an Autonomous System (AS) boundary between this domain and others using by piggybacking the label in external Border Gateway Protocol (eBPG) Network Layer Reachability Information (NLRI) as per RFC 3107, "Carrying Label Information in BGP-4," May 2001, the contents of which are incorporated by reference herein.

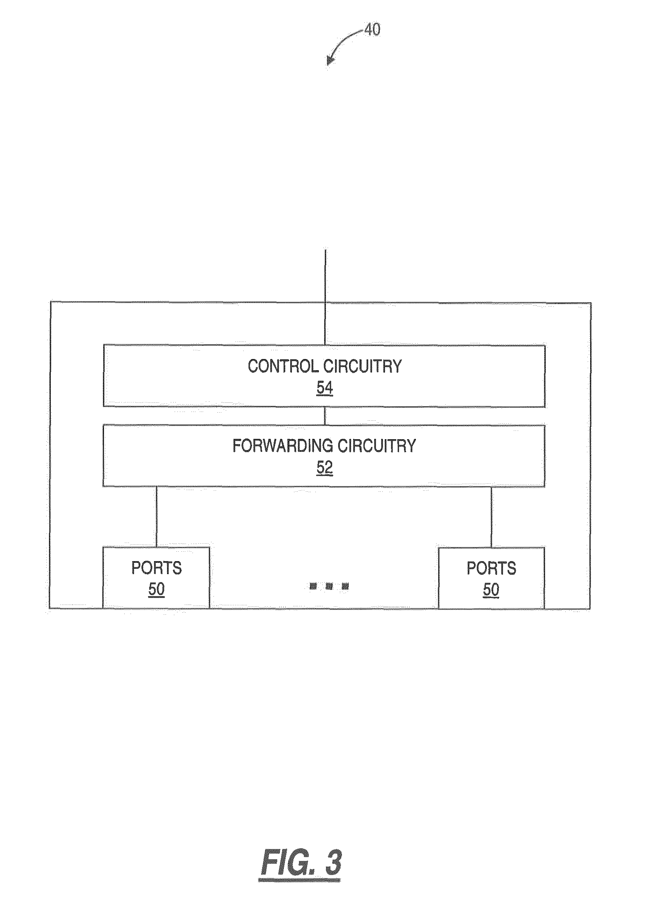

Referring to FIG. 3, in an exemplary embodiment, a block diagram illustrates an exemplary implementation of a network element 40 which may be used with the reduced complexity MPLS systems and methods. In this exemplary embodiment, the network element 40 is a switch for illustration purposes, but those of ordinary skill in the art will recognize the reduced complexity MPLS systems and methods described herein contemplate other types of network elements and other implementations. In this exemplary embodiment, the network element 40 includes a plurality of ports 50, forwarding circuitry 52, and control circuitry 54. The network element 40 can be an LER, LSR, P node, PE node, etc.

The ports 50 provide physical connectivity of the network element 40 to other network elements, switches, routers, etc. The ports 50 are configured to provide ingress and egress of packets such as packets utilizing the reduced complexity MPLS method 30. The forwarding circuitry 52 is configured to either assign packets one of the block of labels associated with the network element 40 as per the reduced complexity MPLS method 30 or to forward a received packet with one of the block of labels associated with another network element. The control circuitry 54 is configured to provide exchange and/or flooding of the block of labels associated with the network element 40 as per the reduced complexity MPLS method 30. For example, the control circuitry 54 can perform the basic IS-IS protocol, without requiring IS-IS traffic engineering extensions or RSVP-TE and/or LDP for packets using the reduced complexity MPLS method 30.

With respect to the MPLS network 10, the reduced complexity MPLS method 30, and the network element 40, it will be appreciated that some exemplary embodiments described herein may include one or more generic or specialized processors ("one or more processors") such as microprocessors, digital signal processors, customized processors, and field programmable gate arrays (FPGAs) and unique stored program instructions (including both software and firmware) that control the one or more processors to implement, in conjunction with certain non-processor circuits, some, most, or all of the functions of the methods and/or systems described herein. Alternatively, some or all functions may be implemented by a state machine that has no stored program instructions, or in one or more application specific integrated circuits (ASICs), in which each function or some combinations of certain of the functions are implemented as custom logic. Of course, a combination of the aforementioned approaches may be used. Moreover, some exemplary embodiments may be implemented as a non-transitory computer-readable storage medium having computer readable code stored thereon for programming a computer, server, appliance, device, etc. each of which may include a processor to perform methods as described and claimed herein. Examples of such computer-readable storage mediums include, but are not limited to, a hard disk, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory), Flash memory, and the like. When stored in the non-transitory computer readable medium, software can include instructions executable by a processor that, in response to such execution, cause a processor or any other circuitry to perform a set of operations, steps, methods, processes, algorithms, etc.

Although the present disclosure has been illustrated and described herein with reference to preferred embodiments and specific examples thereof, it will be readily apparent to those of ordinary skill in the art that other embodiments and examples may perform similar functions and/or achieve like results. All such equivalent embodiments and examples are within the spirit and scope of the present disclosure, are contemplated thereby, and are intended to be covered by the following claims.

## Claims

1. A reduced complexity Multiprotocol Label Switching (MPLS) method (30), comprising:
defining a reserved block of an MPLS label space (32);
uniquely assigning a non-overlapping subset of one or more labels from the block to each network element in a network (34);
operating the network with the reserved block utilizing reduced control plane complexity (38); and
at each Label Switched Router, forwarding a packet with one of the reserved block labels contained thereon without altering the label thereon.

2. The reduced complexity MPLS method of claim 1, further comprising:
distributing the non-overlapping subset of labels for each network element by flooding unaltered to all other network elements.

3. The reduced complexity MPLS method of claim 2, further comprising:
distributing the non-overlapping subset of labels for each network element with an Interior Gateway Protocol with no Traffic Engineering extensions, or further comprising:
eliminating Resource Reservation Protocol - Traffic Engineering and Label Distribution Protocol in the label distribution step, or further comprising:
utilizing one or more of Label Distribution Protocol, Border Gateway Protocol, and Openflow for cross-domain and inter-domain forwarding to mediate flows at sub-domain borders.

4. The reduced complexity MPLS method of claim 2, further comprising:
exchanging the non-overlapping subset of labels for each network element via an internal Border Gateway Protocol Route Reflector peered with every MPLS network element in the network, or further comprising:
exchanging the non-overlapping subset of labels for each network element via an internal Border Gateway Protocol peering between every MPLS network element in the network.

5. The reduced complexity MPLS method of claim 1, further comprising:
performing standard MPLS label swapping operations on packets containing labels outside the reserved block of labels.

6. The reduced complexity MPLS method of claim 1, further comprising:
forwarding a packet with one of the reserved block of labels contained thereon by performing a look up to determine the egress port without requiring a label swapping operation, or
forwarding a packet with one of the reserved block of labels contained thereon by performing a label swapping operation to a same label as the one of the subset contained thereon.

7. A Multiprotocol Label Switching (MPLS) network element (40), comprising:
at least one port (50);
forwarding circuitry (52) communicatively coupled to the port (50); and
control circuitry (54) communicatively coupled to the forwarding circuitry (52) and the port (50);
wherein the forwarding circuitry (52) and the control circuitry (54) are configured to:
receive a defined reserved block of labels from a MPLS label space, each label being available to be associated with a distinct logical destination in the network (10);
for a packet entering the network on the at least one port (50), assigning the packet entering one of the defined reserved block of labels, the label assigned being determined by an ultimate logical destination of the packet in the network; and
for a packet on a Label Switched Path through the at least one port (50), forwarding the packet on the Label Switched Path with a same label contained thereon based on being in the defined reserved block of labels.

8. The MPLS network element of claim 7, wherein the forwarding circuitry (52) and the control circuitry are configured to:
distribute the defined reserved block of labels by flooding unaltered to all other network elements.

9. The MPLS network element of claim 8, wherein the forwarding circuitry (52) and the control circuitry are configured to:
distribute the defined reserved block of labels with an Interior Gateway Protocol with no Traffic Engineering extensions.

10. The MPLS network element of claim 8, wherein the forwarding circuitry (52) and the control circuitry are configured to:
exchange the defined reserved block of labels via an internal Border Gateway Protocol peering between every MPLS network element (40) in the network (10).

11. The MPLS network element of claim 8, wherein the forwarding circuitry and the control circuitry are configured to:
utilize one of Label Distribution Protocol, Border Gateway Protocol, and Openflow for cross-domain and inter-domain forwarding to mediate flows at sub-domain borders.

12. The MPLS network element of claim 8, wherein the forwarding circuitry (52) and the control circuitry (54) are configured to:
exchange the defined reserved block of labels via an internal Border Gateway Protocol Route Reflector peered with every participating MPLS network element (40) in the network (10).

13. The MPLS network element (40) of claim 7, wherein the defined reserved block of labels comprises a portion of labels in a 2²⁰ address space, and wherein the forwarding circuitry (52) and the control circuitry (54) are configured to:
perform standard MPLS label swapping operations on packets containing labels outside the defined reserved block of labels.

14. The MPLS network element of claim 7, wherein the forwarding circuitry (52) and the control circuitry (54) are configured to:
forward a packet with one of the defined reserved block of labels contained thereon by performing a look up without requiring a label swapping operation, or wherein the forwarding circuitry (52) and the control circuitry (54) are configured to:
forward a packet with one of the defined reserved block of labels contained thereon by performing a label swapping operation to a same label as the one of the defined reserved block of labels contained thereon.

15. A Multiprotocol Label Switching (MPLS) network (10), comprising:
a plurality of network elements (12, 14, 16) connected therebetween;
a defined reserved block of a MPLS label space;
a uniquely assigned subset of labels from the defined reserved block to each of the plurality of network elements; and
a reduced complexity control plane;
wherein, for a packet entering the network (10) at one of the plurality of network elements (12, 14, 16), the packet entering the network (10) is assigned one of the uniquely assigned subset of labels learned by that network element, the label assigned being determined by an ultimate logical destination of the packet in the network; and
wherein, for a packet on a Label Switched Path, the packet on the Label Switched Path comprises the same label throughout its transit of the network (10).
